# EUROPÄISCHE PATENTANMELDUNG

(11) **EP 2 772 340 A1**
(43) Veröffentlichungstag der Anmeldung: **03.09.2014**
(21) Anmeldenummer: 13157146.5
(22) Anmeldetag: 28.02.2013
(51) Int. Cl.: B29C 35/08, B29C 35/02, C09K 11/08

(54) **Verstärkter Kunststoff und Verfahren zu dessen Herstellung**

(71) Anmelder: GWP Gesellschaft Für Werkstoffprüfung MbH, 85604 Zorneding (DE)
(72) Erfinder: Dr. Nickl, Julius, 85567 Alxing (DE)
(74) Vertreter: Andrae | Westendorp Patentanwälte Partnerschaft

(57) **Zusammenfassung**

Kunststoff, enthaltend ein Konvertermaterial, welches bei Röntgenbestrahlung eine ultraviolette Strahlung emittiert und ein Verfahren zur Herstellung eines verstärkten Kunststoff (60), wobei in einem Verfahrensschritt A ein aushärtbares Harz (27) in ein Verstärkungsmaterial, wie insbesondere ein Roving (20), ein Gelege, Gewebe, ein Vlies, oder ein Gewirk eingebracht wird oder sonstig mit verstärkenden Materialien vermischt wird und in einem Verfahrensschritt B das aushärtbare Harz Röntgenstrahlung (40) ausgesetzt wird, so dass ein geeignetes im oder am Verstärkungsmaterial oder in dem Harz vorgesehenes Konvertermaterial (70), die Röntgenstrahlung in ultraviolette Strahlung wandelt und das Harz durch diese Strahlung zumindest teilweise aushärtet.

## Beschreibung

Die Erfindung betrifft einen Kunststoff, ein Halbzeug, einen Klebstoff, eine Beschichtung oder ein Bauteil, ein Verfahren zur Herstellung eines verstärkten Kunststoffs und einen Imprägnierkopf.

Bei der Verarbeitung von faserverstärkten Kunststoffen ist das Verfahren bekannt, dass Bündel von den einzelnen Fasern, die als Rovings bezeichnet werden, in einem Imprägnierkopf mit einem aushärtbaren Harz durchnässt und beladen werden, um sie im Anschluss entweder zu schneiden oder mittels einer Ablagevorrichtung in einer Form zur Herstellung eines Bauteils abzulegen. Dabei kann bereits im Imprägnierkopf eine Bestrahlung mit UV-Licht vorgenommen werden, um die Aushärtung des Harzes zu initiieren. Nach dem Initiieren der Aushärtereaktion verbleibt ausreichend Zeit, um das Roving in seine Sollposition in der Form zu bringen, wo es im Anschluss aushärtet. Das Roving kann auch geschnitten werden.

Aufgabe der vorliegenden Erfindung ist es, das oben beschriebene Verfahren zur Erstellung und Aushärtung eines mit Harz versehenen Rovings zu verbessern.

Diese Aufgabe wird mit den Merkmalen der unabhängigen Ansprüche gelöst. Vorteilhafte Ausführungsformen ergeben sich aus den Unteransprüchen.

Dabei umfasst ein Kunststoff ein Konvertermaterial, welches bei Röntgenbestrahlung eine ultraviolette Strahlung emittiert. Enthaltend bedeutet, dass das Material im Kunststoff und/oder dem Verstärkungsmaterial aufgenommen ist. Ein Kunststoff ist insbesondere ein aushärtbarer Kunststoff, wie bspw. ein Duroplast. Da das Konvertermaterial vor dem Aushärten in den Kunststoff eingebracht wurde, kann durch eine Bestrahlung mit Röntgenstrahlung innerhalb des Materials die UV-Strahlung erzeugt werden, die zu dem Aushärten des Kunststoffs notwendig ist. Da die Eindringtiefe von herkömmlich verwendeten UV-Strahlen in das Material insbesondere bei der Verwendung von faserverstärkten Werkstoffen relativ gering ist, konnte herkömmlich häufig nicht ausreichend sichergestellt werden, dass ein Roving, welcher mit UV-Licht bestrahlt wurde, auch in seinem Inneren gut aushärtet. Dieses Problem der Undurchlässigkeit von UV-Strahlung ergibt insbesondere bei Carbon- bzw. Kohlenstofffasern, die eine hohe Strahlenabsorbtionsfähigkeit im sichtbaren Lichtbereich und angrenzenden Frequenzbereichen aufweisen. Im Allgemeinen wird der Begriff UV für Strahlung im Bereich von ca. 250 - 380 nm verwendet. Im Rahmen dieser Erfindung wird der Begriff weiter ausgelegt und definiert für Strahlung, die geeignet ist, einen entsprechenden Aushärtungsvorgang in Harz zu bewirken. So kann auch (sichtbare) Strahlung mit bspw. 400 oder 450 nm, also kaltes blaues Licht, unter den Begriff UV-Strahlung fallen.

Bevorzugt umfasst der Kunststoff, ein Verstärkungsmaterial, wie Fasern und insbesondere Kohlefasern und/oder als Verstärkungsmaterial Keramikkörper und/oder ein Metalleinlegeteil und/oder eine elektronische Komponente und/oder einen sonstigen Füllstoff umfasst, ein Konvertermaterial, welches bei Röntgenbestrahlung eine ultraviolette Strahlung emittiert. Gerade wenn wie oben aufgelistet ein Kunststoff mit Zusatzsubstanzen verwendet wird, so sind diese Zusatzkomponenten häufig lichtundurchlässig und so kann eine externe UV-Strahlung zur Aushärtung nicht das Innere des Kunststoffs, welches von der Zusatzkomponente abgedeckt ist, erreichen und dort den Kunststoff aushärten.

Auch wenn die Erfindung von einer Problemstellung in der Verarbeitung von faserverstärkten Kunststoffen ausging, so wurde erkannt, dass sich die Erfindung auch in anderen Feldern, wie der Verwendung sonstiger Verstärkungssubstanzen oder Füllstoffen in aushärtbaren Kunststoffen eignet, wie im Anschluss im Detail erläutert wird.

Bei einem Verfahren zur Herstellung eines verstärkten Kunststoff wird in einem Verfahrensschritt A ein aushärtbares Harz in ein Verstärkungsmaterial, wie insbesondere ein Roving, ein Gelege, Gewebe, ein Vlies oder ein Gewirk eingebracht oder sonstig mit verstärkenden Materialien vermischt. In einem Verfahrensschritt B wird das aushärtbare Harz Röntgenstrahlung ausgesetzt, so dass ein geeignetes im oder am Verstärkungsmaterial oder in dem Harz vorgesehenes Konvertermaterial, die Röntgenstrahlung in ultraviolette Strahlung wandelt und das Harz durch diese Strahlung zumindest teilweise aushärtet.

Bevorzugt wird zunächst mit dem Verfahrensschritt A begonnen und anschließend wird der Verfahrensschritt B der Bestrahlung durchgeführt. Der Verfahrensschritt B kann erst nach Beendigung des Schritts A durchgeführt oder es kann bereits während dem Verfahrensschritt A mit dem Schritt B begonnen werden. Insbesondere wird zunächst das Harz in den Kunststoff eingebracht und anschließend mit der Bestrahlung begonnen. Aufgrund der begrenzten Eindringtiefe von UV-Strahlung in ein kohlefaserverstärktes oder sonstig mit einem Füllstoff versehenes Bauteil war dieses bei dem herkömmlich bekannten Verfahren kaum möglich. So kann ohne jeglichen Zeitdruck das Harz in die Fasern eingebracht werden und die durchnässten Fasern in einer Form platziert werden und anschließend kann die Aushärtereaktion durch Röntgenstrahlung gestartet werden. Bei Anwendungen, bei denen ein Imprägnierkopf verwendet wird, der das imprägnierte Roving als einen "nassen Faden" ausgibt, so kann die Zeitspanne des Einspritzens, bzw. der Injektions des Harzes in das Roving für die Bestrahlung mit Röntgenstrahlung genutzt, was bei dem herkömmlichen Bestrahlen mit UV-Strahlung kaum möglich war. So kann der Produktionsprozess beschleunigt werden.

Alternativ wird zunächst mit dem Verfahrensschritt B der Bestrahlung begonnen und anschließend der Verfahrensschritt A durchgeführt wird, wobei insbesondere beide Verfahrensschritte zumindest teilweise zeitgleich stattfinden können.

Bevorzugt ist die Röntgenstrahlungsstärke und Dauer derart bemessen, dass nur eine Teilaushärtung des Kunststoffs stattfindet. Eine Teilaushärtung lässt sich so definieren, dass eine weiterführende Vollaushärtung möglich ist, bei der sich eine Festigkeit ergibt, die um mindestens 20% gegenüber der Teilaushärtung erhöht ist. Nach der Teilaushärtung ist eine Weiterverarbeitung gut möglich. Beispielsweise ist es nur unter gewissen Aufwand möglich, ein unausgehärtetes Roving zu trennen, da es klebrig ist. Nach einer Teilaushärtung ist aufgrund der reduzierten Klebrigkeit die Schneidfähigkeit verbessert. Auch lässt sich ein teilausgehärtetes Roving noch materialschädigungsfrei formen. Zu diesem Formen gehört das Bringen in eine Sollform eines Bauteils oder das Rollen zum Zwischenlagern des Rovings auf einer Spule. Die Vollaushärtung kann dabei insbesondere durch eine weitere Röntgenbestrahlung erzielt werden.

Bevorzugt ist das Konvertermaterial ein Down-converting-Material und/oder umfasst das Konvertermaterial eine phosphorisierende Substanz. Ein Down-converting-Material ist ein Material, welches verstärkt in bestimmten Wellenlängen oder Wellenlängenbereichen eine Strahlung absorbiert und die absorbierte Energie zu einem nennenswerten Anteil in einer anderen Wellenlänge oder Wellenlängenbereich emittiert. Es wird aufgrund seiner Eigenschaft die Frequenz der Strahlung zu verändern und insbesondere zu reduzieren entsprechend bezeichnet.

Des Weiteren kann das Konvertermaterial zumindest bereichsweise weitgehend gleichmäßig verteilt in dem Harzanteil des Kunststoffs, Halbzeugs oder Bauteils enthalten sein. Die Herstellung dieser Verteilung kann durch das Vermengen des Konvertermaterials mit dem Harz geschehen, wobei die so entstandene Emulsion in das Roving eingespritzt wird. Dies ist ein kostengünstiges Verfahren der Erzielung einer gleichmäßigen Verteilung.

Alternativ ist das Verstärkungsmaterial mit dem Konvertermaterial zumindest teilweise ummantelt. Die Ummantelung ist ohne einen zusätzlichen Arbeitsschritt möglich, da in sehr vielen Anwendungen die Faser ohnehin mit einer Schlichte beschichtet ist. Diese Beschichtung ist dann vorteilhaft, wenn die Fließeigenschaften des Kunstharzes durch die enthaltenen Konverterpartikel unzulässig negativ beeinflusst werden.

In einer weiteren alternativen Ausführungsform kann das Konvertermaterial in dem Verstärkungsmaterial eingebettet sein. So kann das Konvertermaterial bereits in der Faser, aus der die Kohlenstofffaser erstellt wird, enthalten sein. Bei weiteren bevorzugten Ausführungsformen ist das Konvertermaterial jeweils entweder im Harzanteil oder alternativ in der Ummantelung enthalten oder alternativ im Verstärkungsmaterial enthalten, wobei eine Kombination dieser Ausführungsformen auch möglich ist.

Insbesondere enthält der Kunststoff einzelne Fasern, die in dem ausgehärteten Kunststoff eingebettet sind, wobei Abstände von einer Faser zu einer nächsten Faser bestehen und die Festigkeit des Kunststoffs mit steigendem Abstand von den Fasern derart sinkt, dass sie bei einem Mittelpunkt des Abstands der Fasern einen Tiefpunkt erreicht. Die Festigkeit wird in diesem Sinne synonym als Härte bezeichnet, und die Härte nach Vickers ist in dem mittleren Bereich zwischen zwei beabstandeten Fasern um mindestens 5%, bevorzugt mindestens 10% geringer als in dem Bereich unmittelbar bei den Fasern.

Ein Imprägnierkopf umfasst eine Zuführeinrichtung zur Zuführung von einem Roving oder sonstigem Faserstrang in den Imprägnierkopf, eine Vorrichtung zur Harzeinspeisung in den Roving oder den Faserstrang, eine Strahlungsquelle zur Erzeugung von Röntgenstrahlung und eine Auslassöffnung für den durch die Harzeinspeisung imprägnierten Faserstrangs. Dabei ist bevorzugt die Strahlungsquelle derart angeordnet, dass die Bestrahlung des Harzes vor, während oder nach der Harzeinspeisung in den Roving oder Faserstrang durchführbar ist. Imprägnieren wird im Sinne dieser Anmeldung als das Einbringen, bzw. Einspritzen des Harzes in die Faserstruktur verstanden. Dieser Imprägnierkopf ist somit eine Baugruppe, die für die effektive Einbringung des Harzes in das Roving sorgt.

Im Folgenden wird eine bevorzugte Ausführungsform anhand von Figuren beispielhaft beschrieben. Es zeigen:
- Fig. 1: einen prinzipiellen Aufbau mit einer Imprägniervorrichtung mit der nachfolgend angeordneten Herstellung eines Bauteils,
- Fig. 2: einen Querschnitt des Rovings mit einer Detailansicht,
- Fig. 3: eine Detailansicht des Rovings im Querschnitt einer veränderten Ausführungsform,
- Fig. 4: eine weitere Detailansicht des Rovings im Querschnitt einer veränderten Ausführungsform,
- Fig. 5: eine prinzipielle Ansicht zweier Faser mit einem Abstand zwischen ihnen und
- Fig. 6: die prinzipielle Ansicht der Bestrahlung des Rovings mit Röntgenstrahlung.

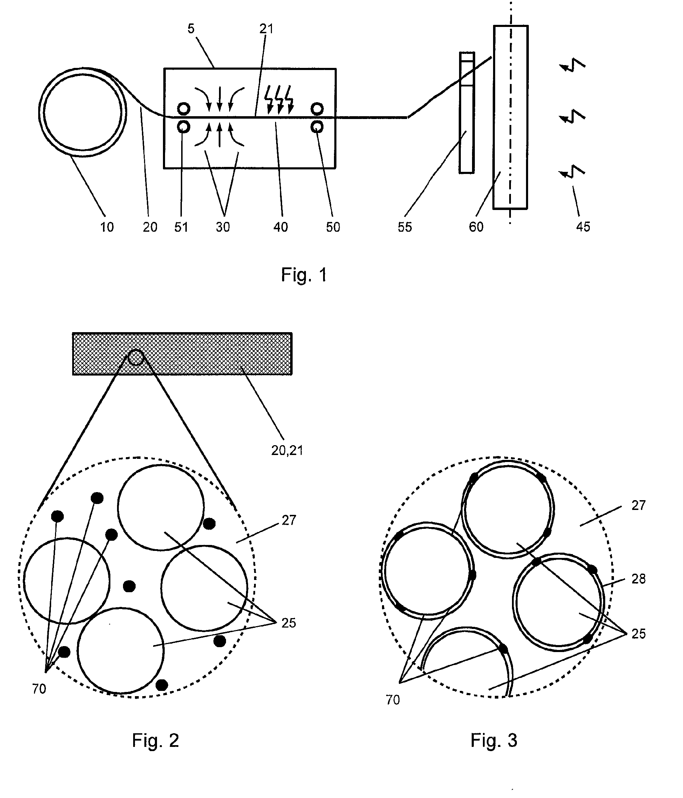

Fig. 1 zeigt eine prinzpielle Anordnung eines Imprägnierkopfes 5 mit einer nachfolgenden Verarbeitung des Rovings 21. Linksseitig ist eine Trommel 10 mit dem Roving dargestellt. Ein Roving ist ein Faserpaket aus weitgehend gleichmäßig in Längsrichtung des Rovings ausgerichteten Fasern. Bei der vorliegenden Aufführungsform werden Kohlenstofffasern verwendet. Der Durchmesser einer einzelnen Faser beträgt 8 µm und kann bei bevorzugten Ausführungsformen zwischen 5µm bis 8µm oder bis 12µm liegen. In jedem einzelnen der Bündel (Rovings) liegen zwischen 1.000 und 24.000 einzelne Fasern, wobei bei einer bevorzugten Ausführungsform 10.000 Fasern Verwendung finden.

Von der Trommel 10 wird der (Endlos-)Strang des Rovings abgerollt und in den Imprägnierkopf 5 gefördert. Hierzu dienen die Rollenantriebe 50 und 51. In den Imprägnierkopf 5 führt ferner eine nicht dargestellte Zufuhr des Kunstharzes. Das Kunstharz ist ein aushärtbares Harz, wie beispielsweise Epoxydharz. Bei der Imprägnierung ist beabsichtigt, das komplette Filament des Rovings 20 also in seinem kompletten Querschnitt gleichmäßig und luft- oder gaseinschlussfrei zu durchtränken und mit dem Harz zu füllen, bzw. zu beladen. Dazu wird das Kunstharz mit Druck in den Roving 20 eingespritzt und kann auch von der Gegenseite durch einen Unterdruck angesaugt werden. Die Viskosität des Kunstharzes ist gering, etwa wie die von Wasser mit 1,0 mPa s bei 20 C. Auch höhere Viskositäten von bis zu 100 mPa s sind denkbar. Für eine gute Durchdringung wird das Harz in einem spitzen Winkel zu den Fasern eingespritzt, so dass es sich in Längsrichtung des Rovings verteilen kann. Dabei kann sich das Harz entlang den Fasern mit einer höheren Geschwindigkeit bewegen, als die Fördergeschwindigkeit des Rovings 20 selbst. Ein Vorteil der Verwendung eines Imprägnierkopfes im Vergleich zu einem herkömmlichen Tränken der Fasern oder des Rovings in dem Harz besteht darin, dass durch eine gezielte Durchpressung des Rovings mit dem Harz eine deutlich bessere und lufteinschlussfreie Aufnahme des Harzes im Roving ermöglicht wird.

Nachfolgend zu der soeben beschriebenen Imprägnierungskammer können im Imprägnierkopf weitere Kammern, wie Wirbelkammern, vorgesehen sein (in Fig. 1 nicht dargestellt) Hier konsolidiert die Verbindung des Harzes mit den Fasern. Im Übergang der einzelnen Kammern zueinander kann eine Kalibrierung des Rovingquerschnitts vorgenommen werden, wobei überschüssiges Harz abgestreift wird. Bevorzugt kann der Querschnitt des Rovings 0,2 mm x 10 mm betragen. Weitere Additive können in den Kammern des Imprägnierkopfes hinzugegeben werden.

Sobald der Roving 20 mit dem Harz getränkt ist, spricht man auch vom nassen Faden 21. Dieser wird in einer nachfolgenden Station mit Röntgenstrahlung aus der Röntgenquelle 40 bestrahlt, um das Harz, wie später im Detail noch beschrieben wird, zumindest teilweise auszuhärten. Nach der Bestrahlung kann der Roving 20, bzw. 21 weiter verarbeitet werden. Hierzu zeigt Fig. 1 die Herstellung eines Rohres 60, bei dem der Roving auf einen Kern aufgerollt wird. Die Legevorrichtung 55 stellt das saubere Wickeln auf den Kern sicher. Die Bestrahlung in dem Imprägnierkopf 5 hat den Aushärtevorgang gestartet, der im sich nachfolgend fortsetzt. Durch das Übereinanderliegen der Rovingabschnitte werden diese Stränge beim Aushärten miteinander verbunden. Optional kann eine weitere Röntgenquelle 45 verwendet werden, um den Aushärtevorgang zu unterstützen und über eine möglichst vollständige Vernetzung die Festigkeit des Werkstücks zu erhöhen.

Auch kann die Röntgenbestrahlung bereits vor oder während dem Einspritzen beginnen, um so die eine möglichst lange Einwirkzeit der Strahlung zu erzielen.

Alternativ oder zusätzlich zu der beschriebenen Verarbeitung des nassen Fadens 21 kann eine Schneidevorrichtung zum Einsatz kommen, die den Faden in vordefinierten Längen ablängt. Diese Stücke können dann manuell oder automatisiert weiter verwendet werden.

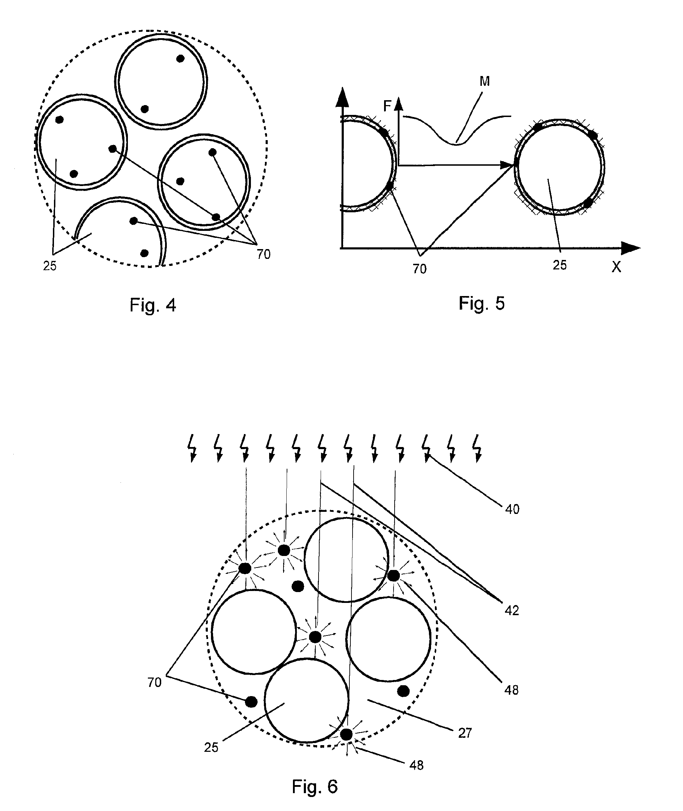

Das Aushärten eines Harzes, wie eines Epoxidharzes, kann üblicher Weise durch die Bestrahlung mit UV-Strahlung erzielt werden. Bei der vorliegenden Ausführungsform wird hingegen mittelbar die Aushärtung mit einer Röntgenquelle bewirkt. Diesen Vorgang erläutert Fig. 2 in Verbindung mit Fig. 6. Fig 2 zeigt den Querschnitt des mit Harz getränkten nassen Fadens 21. Dazu ist im gestrichelten Kreis ein Ausschnitt mit vier Fasern 25 gezeigt. Diese sind von dem Kunstharz 27 umgeben. In das Kunstharz sind Konverterpartikel 70 eingebettet.

Bei der Verwendung von Epoxidharzen können Einkomponenten- und Zweikomponentenwerkstoffe eingesetzt werden. Bei den Einkomponentenharzen tritt der Prozess der Selbstpolymerisation auf, nachdem der Aushärtevorgang durch die Strahlenimmission angestoßen wurde. Er kann sich selbständig fortsetzen oder es kann alternativ für das Anhalten der Aushärtereaktion eine dauerhafte Bestrahlung erforderlich sein. Bei den Zweikomponentenwerkstoffen wird ein Katalysator, bzw. ein Härter eingesetzt, der die Reaktion startet. Bei der Verwendung von Zweikomponentenwerkstoffen werden die Konverterpartikel zur Unterstützung der Aushärtereaktion und zur Erzielung der maximalen Härte des Aushärtens eingesetzt.

Fig. 6 zeigt, wie die Röntgenstrahlung 42 der Röntgenquelle 40 umgewandelt wird. Dazu ist in dem Kunstharz 27 die Vielzahl von Konverterpartikeln 70 eingebettet. Vor dem Einbringen des Kunstharzes 27 in die Zwischenräume der Rovings 20 wurde dieser mit den Konverterpartikein 70 emulgiert. Dieses Emulgieren findet bevorzugt unmittelbar vor dem Einbringen statt, um eine gleichmäßige Partikelverteilung sicher zu stellen. Die Größe der Konverterpartikel beträgt im Durchmesser weniger als 1µm und so wird ermöglicht, dass sich das Kunstharz und die darin enthaltenen Konverterpartikel gleichmäßig im Roving verteilt. Zur Unterstützung der gleichmäßigen Verteilung kann neben dem Rollenantrieb 50 ein zweiter Antrieb 51 vor dem Einbringen des Harzes angeordnet sein, dessen Fördergeschwindigkeit etwas höher ist, als die des dahinterliegenden Antriebs 50, so dass der Roving im Bereich des Einbringens des Kunstharzes gestaucht wird und sich die einzelnen Fasern so leicht aufweiten. Zusätzlich oder alternativ können mechanische Führungen zur Verbesserung des Einbringens vorgesehen sein.

Wenn nun Röntgenstrahlung 42 auf die Konverterpartikel 70 fällt, so werden diese angeregt und wandeln die Röntgenstrahlung 42 in UV-Strahlung 48 um. Die Konverterstoffe sind insbesondere phosphorisierende Stoffe. Es kann ein Seltene-Erdendotiertes ZrO₂, wie z.B. mit einer Yttrium-Dotierung verwendet werden. Folgende weiteren beispielhaften Stoffe sind möglich, wie SrHfO₃:Ce, welches in einer Wellenlänge von 390nm emittiert. BaFCl:Eu²⁺ emittiert mit 380 nm, bei einer Emissionsausbeute von 13%. BaSO₄:Eu²⁺ emittiert mit 390nm bei einer Emissionsausbeute von 13%. LaOBr:Tm³⁺ emittiert bei ca. 360 nm mit einer Ausbeute von 14%. YTaO₄ emittiert mit 337 nm, weitere typische Materialien sind LaOBr:Tm³⁺, BaFX:EU²⁺, YTaO₄:Nb, LnOX:Tm³⁺. US 5,008,034 beschreibt den Stoff DTiₓM_{y}Nd_{w}, der Röntgenstrahlen absorbiert und bei ca. 280 nm die Energie wieder emittiert. Weitere folgende Stoffe sind prinzipiell geeignet: BaFI:EU²⁺ (380nm), CaWO₄, (420nm), Gd₂O₂:Tb³⁺(545nm), LaOBr:Tb³⁺ (360;460nm) La₂O₂S:Tb³⁺ (545nm) Y₂O₂S:Tb³⁺ (420nm) YTaO₄ (337nm) YTaO₄:Nb (410nm) ZnS:Ag (450nm). Aus den Schriften US 4,992,205, US 4,990,282 und US 4,996,003 sind Titan-aktivierte Hafnium und/oder Zirkonium-Substanzen bekannt, die Indium, Scandium bzw. eine ausgewählte Seltene Erde enthalten.

Bevorzugt werden Stoffe verwendet, die im Bereich der UV-A-Strahlung mit einer Wellenlänge von ca. 300 - 400 nm emittieren, da bei diesen Wellenlängen die Aushärtewirkung auf das Harz gut ist. Der Wirkungsgrad beträgt bis zu ca. 20%, d.h. 20% der Röntgenenergie wird in UV-Energie umgesetzt.

Wie in Fig. 6 gezeigt ist, dringen die Röntgenstrahlen 40 durch die Kohlenstofffasern 20, wie auch durch das Kunstharz 27. Hier liegt ein Vorteil der Bestrahlung mit Röntgenstrahlung, die deutlich besser als UV-Strahlung das Roving 20 durchdringen und Innenbereiche des Rovings mit Strahlung versorgen kann. Die UV-Strahlung hingegen wird von den Kohlenstofffasern 25 hingegen praktisch komplett absorbiert, so dass externe UV-Strahlung nicht in das Innere des Rovings eindringen kann. Dies ist unter anderem der Grund, warum bei herkömmlichen Rovingimprägnierungsverfahren das Harz vor dem Einbringen in das Roving mit UV-Licht aktiviert und so die Reaktion initiiert wird und in der Zeitspanne zwischen dem Aktivieren und Aushärten wird herkömmlich das Harz in das Roving eingebracht, bzw. eingespritzt.

Fig. 3 zeigt eine alternative Ausführungsform der Verwendung der Konverterpartikel 70. Hier ist gezeigt, dass die Kunststofffasern 25 mit einer Schlichte 28 versehen sind. Diese Schlichte 28 dient der Reduzierung des Reibkoeffizienten und sorgt somit dafür, dass die einzelnen Fasern im Roving weitestgehend gleichgerichtet und parallel zueinander angeordnet werden können, was in Folge sicherstellt, dass das Rovingpaket die maximal mögliche Zugfestigkeit durch Ausnutzung sämtlicher Fasern erhält. Zudem dient die Schlichte 28 als ein Haftgrund, um die Festigkeit der Verbindung der Faser mit dem Harz zu verbessern. Diese Schlichte wird auch bei den Ausführungsformen gemäß Fig. 2 und 4 verwendet, wo sie allerdings aus Gründen der Übersichtlichkeit nicht dargestellt ist. In der Schlichte 28 sind die Konverterpartikel 70 eingebettet. Dies geschieht während des Beschichtungsvorgangs der Fasern mit der Schlichte 28. Die Wirkungsweise der Konverterpartikel entspricht der bereits oben beschriebenen. Der Anteil der Konverterpartikel 70 beträgt 0,1 - 0,5 m% und die Größe liegt bevorzugt zwischen 30 und 1000 nm. Bei einer Partikelgröße von 50 nm, wie sie z.B. bei CaWO₄ gut einstellbar ist, lassen sich die Partikel in die Schlichte 28 einbetten, ohne dass sie (sonderlich) auftragen und so die Gleitwirkung der Schlichte negativ beeinflussen. Weiter bevorzugt kann die Partikelgröße zwischen 50 und 500 nm liegen und insbesondere zwischen 50 und 100 nm. Als ein Partikel kann im weiteren Sinne auch ein ionenförmiges Teilchen, wie ein Atom oder Molekül verstanden werden, welches im Harz gelöst wurde. Somit ergeben sich dann für die Partikelgrößen deutlich kleinere Werte als die oben genannten.

Fig. 4 zeigt eine weitere alternative Verwendung der Konverterpartikel. Diese sind in der Kohlenstofffaser 25 eingebettet. Dies geschieht durch eine Dotierung der Kunststofffaser, bzw. Nitrilfaser, die anschließend zur Erzeugung der Kohlenstofffaser karbonisiert wird. Die Dotierung kann hier, wie auch bei den anderen Ausführungsformen, durch die Zugabe der Partikel, wie z.B. als Nanoteilchen, als Salz oder durch in der Schmelze der Kunststofffaser gelöste Ionen geschehen. Bei den Ausführungsformen gemäß Fig. 3 und Fig. 4 beträgt die Konzentration der Konverterpartikel 0,1 - 0,5 m% bei Betrachtung der Kombination der Fasern mit dem sie umgebenden Harzes eines Rovings.

In Fig. 5 sind zwei Fasern 20 gezeigt, wobei der Abstand zwischen ihnen zur Darstellung des folgenden Effekts deutlich vergrößert dargestellt ist. Die Intensität der UV-Strahlung nimmt aufgrund ihrer räumlichen Ausdehnung mit zunehmenden Abstand von den Konverterpartikeln 70 mit dritter Potenz ab. So ist die UV-Strahlung direkt bei den Konverterpartikeln am größten. Fig. 5 zeigt, dass die Konverterpartikel direkt auf den Fasern 20 angeordnet sind. Somit ist dort die UV-Strahlung am höchsten. Dies bewirkt eine verstärkte (Teil-)Aushärtung in diesen Bereichen. In der Mitte M zwischen zwei Fasern ist sie geringer, wie dies in dem Diagramm der Fig.5 mit der Festigkeit über den Weg X ausgedrückt wird. Diese Festigkeitsreduzierung ist vorteilhaft, da bei dem teilausgehärteten Material herkömmlich ein sprödes Verhalten feststellbar war. Aufgrund der geringeren Festigkeit im Mittelbereich M, ist die Neigung zur Sprödigkeit deutlich reduziert.

Als Fasern können bevorzugt Kohlenstofffasern verwendet werden. Alternativ können als Fasern beliebige andere Fasern zum Einsatz kommen. Hierzu zählen insbesondere Glas-, Aramid-, Nylon-, Bor- oder hochfeste Polyethylenfasern (Markenname: Dyneema®).

Auch können im Kunststoff zusätzliche Werkstoffe oder Füllstoffe Verwendung finden. Beispielsweise kann Sand, bzw. Quarzsand eingebettet werden, um die Abriebfestigkeit zu erhöhen. Ein derartiger Werkstoff kann bei kohlenstoffverstärkten Bremsscheiben zum Einsatz kommen. Auch kann der (Quarz-)Sand als ein Füllstoff verwendet werden, um das Harz zu strecken. In jedem Fall bleibt der Vorteil erhalten, dass die Röntgenstrahlung den Werkstoff, zusammen mit den weiteren Inhaltsstoffen gut durchdringen kann und so durch die Umwandlung in UV-Strahlung für eine in Werkstoffdickenrichtung gleichmäßige Vernetzung des Kunststoffs und somit für eine gleichmäßige Festigkeitsverteilung sorgt.

Auch bei der Verwendung von Metalleinlageteilen ergibt sich ein Vorteil. Herkömmlich wird nämlich diese Komponente bei z.B. 120°C ausgehärtet. Aufgrund der unterschiedlichen Temperaturausdehnungskoeffizienten von Metall und dem Harz entstehen Spannungen und (Mikro-)Risse, die die Verbindung von dem Metall und dem Harz schädigen. Da aufgrund der Röntgenstrahlung das Werkstück keiner thermischen Behandlung ausgesetzt werden muss, fällt diese Materialschädigung weg. Auch wenn temperaturempfindlichen Komponenten, wie elektronische Komponenten oder (elektronische) Sensoren eingebettet werden müssen ergibt sich der gleiche Vorteil.

Ferner lassen sich die Konverterpartikel 70 bei Klebstoffen einsetzen. Es kann der Klebstoff gerade bei rauen Oberflächen zum Einsatz kommen, da er in Verwendung mit Epoxydharzen, die eine geringe Schwindung haben, zum Überbrücken größerer Klebespalte sehr geeignet ist. Die Aktivierung kann durch die verklebten Komponenten hindurch erfolgen.

Allgemein gesprochen, eignet sich die Verwendung von einem Konverter in dem Harz gerade bei Anwendungen, bei denen das Bauteil zum Aushärten nicht erhitzt werden darf und bei denen aufgrund der Bauart und Geometrie das Innere des Bauteils nicht von einer UV-Bestrahlung erreicht wird. Bei der Vernetzung tritt stets eine Schrumpfung auf. Hier bietet die Bestrahlung mit Röntgenstrahlen den Vorteil, dass die Aushärtungsreaktion über das gesamte Bauteil weitestgehend gleich und zeitgleich ist und so innere Spannungen bzw. ein Verzug, der durch ein ungleichmäßiges Schrumpfen entsteht, reduziert werden.

Vorstehend wurde vorrangig die Verwendung der Konverterpartikel mit Faserrovings beschrieben. Auch bei der Verarbeitung von Geweben oder Vliesen können die Konverterpartikel zum Einsatz kommen. Als ein Gewebe wird eine zwei- oder dreidimensional verwebte Struktur bezeichnet. In Kleinserienproduktionsprozess werden die Gewebe häufig manuell mit Harz getränkt. Dabei passen sich die Gewebe gut der entsprechenden Negativform, in die sie eingelegt sind oder die sie umspannen an, so dass bspw. auch Wölbungen gut gebildet werden. In der Großserienherstellung, wie z.B. bei dem Karosseriebau im Kfz-Bereich können die Gewebe in einer (geschlossenen) Form aufgenommen sein, in die in Folge das Harz eingespritzt werden kann. Ein Vlies zeichnet sich dadurch aus, dass die Fasern einer zwei- oder dreidimensionalen Matte keine bevorzugte Ausrichtung aufweisen. Der Vorteil von mehrlagigen Gelegen besteht darin, dass so hohe Festigkeiten in unterschiedlichen Belastungsrichtungen erzielt werden können.

Bei der Verarbeitung wird das Gewebe oder Vlies in die Form eingebettet und anschließend wird das Harz in die geschlossene Form eingespritzt. Zum Aushärten wird hier häufig die Methode der Erwärmung verwendet. Zur Verbesserung des Aushärtungsgrades und/oder zur Reduzierung der Zykluszeiten und dabei zur Reduzierung des Energieeinsatzes können die vorstehend beschriebenen Konverterpartikel in Verbindung mit der Röntgenstrahlung eingesetzt werden. Gerade wenn die Form aus einem nicht-metallischen Werkstoff gefertigt ist, können die Röntgenstrahlen die Wände der Form durchdringen und im Inneren der Form die Aushärtung bewirken. Auch ist bekannt, dass das fertige Werkstück in der Form oder nach der Entnahme aus der Form durch externe Bestrahlung mit UV-Licht weiter ausgehärtet werden kann. (Curing) Dieser Vorgang kann jedoch bei dem fertigen Werkstück problematisch sein, da häufig mehrere Lagen des Gewebes, des Vlies oder des Rovings übereinander liegen und so wird das Curing von tiefer liegenden Bereichen erschwert oder verhindert. Hier ist auch das bessere Materialdurchdringen von Röntgenstrahlung vorteilhaft.

Merkmale oder Vorteile die bei einzelnen Ausführungsformen beschrieben wurden können auch bei anderen Ausführungsformen anwendbar sein, sofern diesem keine technischen Gründe entgegenstehen.

## Patentansprüche

1. Kunststoff, enthaltend ein Konvertermaterial (70), welches bei Röntgenbestrahlung eine ultraviolette Strahlung emittiert, wobei der Kunststoff insbesondere aushärtbar oder ausgehärtet ist.

2. Kunststoff gemäß Anspruch 1, welcher ein Verstärkungsmaterial (20), wie Fasern und insbesondere Kohlefasern, umfasst und/oder als Verstärkungsmaterial Keramikkörper und/oder Metallteile und/oder elektronische Komponenten, wie bspw. Sensoren und/oder einen sonstigen Füllstoff umfasst.

3. Halbzeug, Klebstoff, Beschichtung oder Bauteil (60) mit einem Kunststoff gemäß Anspruch 1 oder 2.

4. Verfahren zur Herstellung eines verstärkten Kunststoff (60), wobei in einem Verfahrensschritt A ein aushärtbares Harz (27) in ein Verstärkungsmaterial, wie insbesondere ein Roving (20), ein Gelege, Gewebe, ein Vlies, oder ein Gewirk eingebracht wird oder sonstig mit verstärkenden Materialien vermischt wird und in einem Verfahrensschritt B das aushärtbare Harz Röntgenstrahlung (40) ausgesetzt wird, so dass ein geeignetes im oder am Verstärkungsmaterial oder in dem Harz vorgesehenes Konvertermaterial (70), die Röntgenstrahlung in ultraviolette Strahlung wandelt und das Harz durch diese Strahlung zumindest teilweise aushärtet.

5. Verfahren nach Anspruch 4, wobei zunächst mit dem Verfahrensschritt A begonnen und anschließend der Verfahrensschritt B der Bestrahlung durchgeführt wird, wobei insbesondere beide Verfahrensschritte zumindest teilweise zeitgleich stattfinden.

6. Verfahren nach Anspruch 4, wobei zunächst mit dem Verfahrensschritt B der Bestrahlung begonnen und anschließend der Verfahrensschritt A durchgeführt wird, wobei insbesondere beide Verfahrensschritte zumindest teilweise zeitgleich stattfinden

7. Verfahren gemäß einem der Ansprüche 4 bis 6, wobei die Röntgenstrahlungsstärke und Dauer derart bemessen ist, dass nur eine Teilaushärtung des Kunststoffs stattfindet.

8. Verfahren gemäß einem der Ansprüche 4 bis 6, wobei das gebildete Halbzeug oder Bauteil zur Vollaushärtung des Harzes mit Röntgenstrahlung bestrahlt wird.

9. Verstärkter Kunststoff oder Halbzeug oder Bauteil oder Verfahren nach dem entsprechenden der vorangegangenen Ansprüche, wobei das Konvertermaterial (70) ein Down-converting-Material ist und/oder das Konvertermaterial eine phosphorisierende Substanz umfasst.

10. Verstärkter Kunststoff oder Halbzeug oder Bauteil oder Verfahren gemäß Anspruch 9, wobei das Konvertermaterial (70) zumindest bereichsweise weitgehend gleichmäßig in dem Harzanteil (72) des Kunststoffs, Halbzeugs oder Bauteils enthalten ist.

11. Verstärkter Kunststoff oder Halbzeug oder Bauteil oder Verfahren gemäß Anspruch 9 oder 10, wobei das Verstärkungsmaterial (25) mit dem Konvertermaterial (70) zumindest teilweise ummantelt ist.

12. Verstärkter Kunststoff oder Halbzeug oder Bauteil oder Verfahren gemäß einem der Ansprüche 9 bis 11, wobei das Konvertermaterial (70) in dem Verstärkungsmaterial (25) eingebettet ist.

13. Verstärkter Kunststoff oder Halbzeug oder Bauteil oder Verfahren gemäß einem der Ansprüche 9 bis 12, wobei der Kunststoff einzelne Fasern (25) enthält, die in dem ausgehärteten Kunststoff (27) eingebettet sind, wobei Abstände von einer Faser zu einer nächsten Faser bestehen und die Festigkeit des Kunststoffs mit steigendem Abstand von den Fasern derart sinkt, dass sie bei einem Mittelpunkt des Abstands der Fasern einen Tiefpunkt erreicht.

14. Imprägnierkopf (5) mit einer Zuführeinrichtung zur Zuführung von einem Roving (20) oder sonstigem Faserstrang in den Imprägnierkopf (5), einer Vorrichtung zur Harzeinspeisung (30) in den Roving (20) oder den Faserstrang, einer Strahlungsquelle (40) zur Erzeugung von Röntgenstrahlung und einer Auslassöffnung des durch die Harzeinspeisung imprägnierten Faserstrangs, wobei insbesondere die Strahlungsquelle derart angeordnet ist, dass die Bestrahlung des Harzes vor, während und/oder nach der Harzeinspeisung in den Roving oder den Faserstrang durchführbar ist.
